# EUROPÄISCHE PATENTSCHRIFT

(11) **EP 2 188 212 B1**
(45) Veröffentlichungstag und Bekanntmachung des Hinweises auf die Patenterteilung: **02.12.2015**
(21) Anmeldenummer: 08801827.0
(22) Anmeldetag: 03.09.2008
(51) Int. Cl.: C01B 31/04, B82Y 30/00, B82Y 40/00

(54) **VERFAHREN ZUR HERSTELLUNG VON GRAPHENSCHICHTEN**
METHOD TO PRODUCE GRAPHENE LAYERS
PROCEDE DE PRODUCTION DE COUCHES DE GRAPHENE

(30) Priorität: 03.09.2007 DE 102007041820
(43) Veröffentlichungstag der Anmeldung: 26.05.2010
(73) Patentinhaber: Universität Bielefeld, 33615 Bielefeld (DE)
(72) Erfinder: GÖLZHÄUSER, Armin, 33615 Bielefeld (DE); TURCHANIN, Andrey, 07747 Jena (DE)
(74) Vertreter: Müller-Boré & Partner Patentanwälte PartG mbB
(86) Internationale Anmeldenummer: PCT/EP2008/007203
(87) Internationale Veröffentlichungsnummer: WO 2009/030473

(56) Entgegenhaltungen:
- TURCHANIN A ET AL: "High thermal stability of cross-linked aromatic self-assembled monolayers: Nanopatterning via selective thermal desorption" APPLIED PHYSICS LETTERS, AIP, AMERICAN INSTITUTE OF PHYSICS, MELVILLE, NY, Bd. 90, Nr. 5, 29. Januar 2007 (2007-01-29), Seiten 53102-053102, XP012095852 ISSN: 0003-6951
- ECK WOLFGANG ET AL: "Freestanding nanosheets from crosslinked biphenyl self-assembled monolayers" ADVANCED MATERIALS, WILEY VCH, WEINHEIM, DE, Bd. 17, Nr. 21, 4. November 2005 (2005-11-04), Seiten 2583-2587, XP002458834 ISSN: 0935-9648 in der Anmeldung erwähnt
- NOVOSELOV K S ET AL: "Electric field effect in atomically thin carbon films" SCIENCE, AMERICAN ASSOCIATION FOR THE ADVANCEMENT OF SCIENCE, US, WASHINGTON, DC, Bd. 306, Nr. 5696, 11. Oktober 2004 (2004-10-11), Seiten 666-669, XP009086357 ISSN: 0036-8075

## Beschreibung

Die vorliegende Erfindung betrifft ein Verfahren zur Herstellung von Graphenschichten, die aus 1 bis 3 Atomlagen bestehen, umfassend den Schritt des Erhitzens mindestens einer Monoschicht mit in lateraler Richtung vernetzten niedermolekularen Aromaten und/oder niedermolekularen Heteroaromaten unter Vakuum oder Inertgas auf eine Temperatur von > 1000K, und Graphenschichten, welche nach diesem Verfahren erhältlich sind.

Graphenschichten sind im Stand der Technik bekannt und werden entweder durch Abschälen von einem hochreinen Graphitkristall gewonnen oder durch Pyrolyse von Siliciumcarbid, durch Erhitzen von C₂H₆ auf Pt(111) oder aus Graphenoxiden hergestellt. Diese Verfahren zur Herstellung von Graphenschichten unterliegen jedoch starken Beschränkungen und sind nur begrenzt anwendbar.

Der vorliegenden Erfindung liegt somit die Aufgabe zugrunde, ein neues Verfahren zur Herstellung von Graphenschichten, die aus 1 bis 3 Atomlagen bestehen, umfassend bereitzustellen, das auch eine gezielte laterale Strukturierung einer Substratoberfläche im Nanometerbereich ermöglichen soll. Insbesondere soll ermöglicht werden, Strukturen aus Graphenschichten im Nanometerbereich auf unterschiedlichen Substraten zu erzeugen.

Diese Aufgabe wird durch die in den Ansprüchen gekennzeichneten Ausführungsformen gelöst.

Insbesondere wird ein Verfahren zur Herstellung von Graphenschichten, die aus 1 bis 3 Atomlagen bestehen, umfassend bereitgestellt, umfassend den Schritt des Erhitzens mindestens einer Monoschicht mit in lateraler Richtung vernetzten niedermolekularen Aromaten und/oder niedermolekularen Heteroaromaten unter Vakuum oder Inertgas auf eine Temperatur von > 1000 K, wobei die Monoschicht aus Aromaten, ausgewählt aus der Gruppe, bestehend aus Phenyl, Biphenyl, Terphenyl, Naphthalin und Anthracen, und/oder Heteroaromaten, ausgewählt aus der Gruppe, bestehend aus Bipyridin, Terpyridin, Thiophen, Bithienyl, Terthienyl und Pyrrol, ausgewählt ist bzw. sind.

Der Begriff "Graphenschicht" bedeutet gemäß der vorliegenden Erfindung eine überwiegend aus Kohlenstoff aufgebaute, elektrisch leitfähige Schicht, die aus 1 bis 3 Atomlagen besteht, Die Schichtdicke der erfindungsgemäß hergestellten Graphenschicht liegt vorzugsweise unter 2 nm.

Die Monoschicht mit in lateraler Richtung vernetzten niedermolekularen Aromaten und/oder niedermolekularen Heteroaromaten bzw. die in lateraler Richtung vernetzte Monoschicht kann durch Vernetzung von niedermolekularen Aromaten und/oder niedermolekularen Heteroaromaten, die vorzugsweise Ankergruppen aufweisen, gebildet werden. Vorzugsweise wird die in lateraler Richtung vernetzte Monoschicht durch Behandeln einer aus niedermolekularen Aromaten und/oder niedermolekularen Heteroaromaten, die vorzugsweise Ankergruppen aufweisen, aufgebauten (unvernetzten) Monoschicht mit energiereicher Strahlung gebildet.

In dem erfindungsgemäßen Verfahren ist die Monoschicht, die insbesondere durch Behandeln mit energiereicher Strahlung vernetzbar ist, aus Aromaten, ausgewählt aus der Gruppe, bestehend aus Phenyl, Biphenyl, Terphenyl, Naphthalin und Anthracen, und/oder Heteroaromaten, ausgewählt aus der Gruppe, bestehend aus Bipyridin, Terpyridin, Thiophen, Bithienyl, Terthienyl und Pyrrol, aufgebaut.

Die Vernetzung der Monoschicht in lateraler Richtung erfolgt vorzugsweise durch energiereiche Strahlung. Insbesondere kann die Vernetzung der Monoschicht in lateraler Richtung durch Behandlung mit Elektronenstrahlung, Plasmastrahlung, Röntgenstrahlung, β-Strahlung, γ-Strahlung, VUV-Strahlung, EUV-Strahlung oder UV-Strahlung erzielt werden.

Die niedermolekularen Aromaten und/oder niedermolekularen Heteroaromaten weisen vorzugsweise Ankergruppen auf. Wenn die niedermolekularen Aromaten und/oder niedermolekularen Heteroaromaten Ankergruppen aufweisen, kann die Monoschicht aus niedermolekularen Aromaten und/oder niedermolekularen Heteroaromaten in einfacher Weise an eine Vielzahl von Substraten als Monoschicht gebunden werden. Eine Bindung der vernetzten Monoschicht an ein Substrat kann durch Physisorption (d.h. mit einer Bindungsenergie bis etwa 0,5 eV/Atom bzw. < 41,9 kJ/mol) oder durch Chemisorption (d.h. mit einer Bindungsenergie von größer 0,5 eV/Atom bzw. ≥ 41,9 kJ/mol), beispielsweise durch Ausbilden kovalenter Bindungen, erfolgen. Die Ankergruppen können aus der Gruppe, bestehend aus Carboxy-, Thio-, Trichlorsilyl-, Trialkoxysilyl-, Phosphonat-, Hydroxamsäure- und Phosphatgruppen, ausgewählt sein. Die Ankergruppen können mit Hilfe eines Abstandshalters mit einer Länge von 1 bis zu 10 Methylengruppen an die in lateraler Richtung vernetzte, aus niedermolekularen Aromaten und/oder niedermolekularen Heteroaromaten aufgebaute Monoschicht kovalent gebunden sein.

Ein Fachmann ist in der Lage, die Natur der Ankergruppe in geeigneter Weise an das jeweils gewünschte Substratmaterial anzupassen. Beispielsweise eignen sich für oxidierte Siliciumoberflächen insbesondere Trichlor- oder Trialkoxysilane, wie z.B. Trimethoxysilan, Triethoxysilan, etc., als Ankergruppen. Für hydrierte Silciumoberflächen können Alkoholgruppen zur Verankerung eingesetzt werden. Für Gold- und Silberoberflächen kommen z.B. Thiogruppen als Ankergruppen in Frage und für oxidierte Metalloberflächen, wie Eisen oder Chrom, sind Phosphonsäuren, Carbonsäuren oder Hydroxamsäuren geeignet.

Die in lateraler Richtung vernetzte Monoschicht, die durch Behandeln einer aus niedermolekularen Aromaten und/oder niedermolekularen Heteroaromaten aufgebauten Monoschicht mit energiereicher Strahlung herstellbar ist, kann auf einem Substrat chemisorbiert oder physisorbiert sein oder freistehend sein bzw. nicht an eine Substratoberfläche gebunden vorliegen.

Eine in lateraler Richtung vernetzte Monoschicht, die auf einem Substrat chemisorbiert bzw. kovalent gebunden ist, läßt sich durch Aufbringen einer aus niedermolekularen Aromaten und/oder niedermolekularen Heteroaromaten, die vorzugsweise Ankergruppen aufweisen, aufgebauten Monoschicht auf ein Substrat und Behandeln mit energiereicher Strahlung herstellen.

Wenn gewünscht, läßt sich die in lateraler Richtung vernetzte Monoschicht mit einem geeigneten Transfermedium auf ein anderes Substrat übertragen. Beispielsweise läßt sich eine in lateraler Richtung vernetzte Monoschicht, die auf einem Goldsubstrat, Siliciumsubstrat oder Siliciumnitridsubstrat aufgebracht ist, mit einem geeigneten Transfermedium auf ein anderes Substrat, vorzugsweise ein thermisch stabiles Substrat, wie Siliciumoxid, Aluminiumoxid, Glas, Platin, Iridium, Wolfram oder Molybdän, übertragen.

Eine in lateraler Richtung vernetzte Monoschicht, die freistehend ist bzw. die nicht an eine Substratoberfläche gebunden vorliegt, läßt sich durch Aufbringen einer aus niedermolekularen Aromaten und/oder niedermolekularen Heteroaromaten, die vorzugsweise Ankergruppen aufweisen, aufgebauten Monoschicht auf ein Substrat, Behandeln mit energiereicher Strahlung und Spaltung der Bindungen zwischen der vernetzten Monoschicht und einem Substrat, vorzugsweise Spaltung einer kovalenten Bindung zwischen Ankergruppen der vernetzten Monoschicht und einem Substrat, herstellen. Ein Fachmann ist in der Lage geeignete Bedingungen für die Spaltung der Bindung zwischen der vernetzten Monoschicht und dem Substrat auszuwählen. Beispielsweise läßt sich die Bindung zwischen einer aus Biphenylthiol gebildeten, vernetzten Monoschicht und Gold als Substrat durch Behandeln mit loddampf spalten.

In einer anderen Ausführungsform läßt sich eine in lateraler Richtung vernetzte Monoschicht, die freistehend ist bzw. die nicht an eine Substratoberfläche gebunden vorliegt, durch Aufbringen einer aus niedermolekularen Aromaten und/oder niedermolekularen Heteroaromaten aufgebauten Monoschicht auf eine Opferschicht bzw. Zwischenschicht auf einem Substrat, Behandeln mit energiereicher Strahlung und Auflösen der Opferschicht bzw. Zwischenschicht zwischen der vernetzten Monoschicht und einem Substrat herstellen. Ein Fachmann ist in der Lage geeignete Materialien für derartige Opferschichten, die zwischen der vernetzten Monoschicht und dem Substrat angeordnet sind, auszuwählen. Beispielsweise läßt sich eine Siliciumnitridschicht als Opferschicht zwischen einer vernetzten Monoschicht und einem Substrat, wie Silicium, durch Behandeln mit Fluorwasserstoffsäure entfernen.

Die Spaltung der Bindungen zwischen einer in lateraler Richtung vernetzten Monoschicht und einem Substrat und das Auflösen einer Opferschicht bzw. Zwischenschicht zwischen einer in lateraler Richtung vernetzten Monoschicht und einem Substrat läßt sich beispielsweise wie in Advanced Materials 2005, 17, 2583-2587 beschrieben durchführen, ist jedoch nicht darauf beschränkt. Durch diese Verfahrensweisen ist es beispielsweise möglich, eine freistehende bzw. nicht an eine Substratoberfläche gebundene in lateraler Richtung vernetzte Monoschicht zu bilden, die in dem erfindungsgemäßen Schritt des Erhitzens mindestens einer Monoschicht mit in lateraler Richtung vernetzten niedermolekularen Aromaten und/oder niedermolekularen Heteroaromaten unter Vakuum oder Inertgas auf eine Temperatur von > 1000K zur Herstellung von Graphenschichten eingesetzt werden kann.

Das Substrat kann bereichsweise Aussparungen aufweisen. Beispielsweise ist es möglich, daß das Substrat Löcher, Vertiefungen oder Rillen aufweist. Das Substrat kann auch in Form eines Gitters oder einer gitterähnlichen Form vorliegen. Vorzugsweise ist das Substrat aus einem thermisch beständigen Material, wie Wolfram, aufgebaut. Eine erfindungsgemäß hergestellte Graphenschicht kann auf einem Substrat getragen sein oder lediglich auf einem Substrat aufliegen und bereichsweise Aussparungen in dem Substrat überspannen bzw. überdecken.

Gemäß einer Ausführungsform der vorliegenden Erfindung ist es möglich, daß die in lateraler Richtung vernetzte Monoschicht durch Vernetzung von niedermolekularen Aromaten und/oder niedermolekularen Heteroaromaten, die vorzugsweise Ankergruppen aufweisen, auf einem ersten Substrat, wie Gold, Silicium oder Siliciumnitrid, gebildet wird, die in lateraler Richtung vernetzte Monoschicht anschließend auf ein zweites thermisch stabiles Substrat, wie Siliciumoxid, Aluminiumoxid, Glas, Platin, Iridium, Wolfram oder Molybdän, übertragen wird und auf diesem thermisch stabilen Substrat unter Vakuum oder Inertgas auf eine Temperatur von > 1000K erhitzt wird.

Es ist aber auch möglich, daß die in lateraler Richtung vernetzte Monoschicht durch Vernetzung von niedermolekularen Aromaten und/oder niedermolekularen Heteroaromaten, die vorzugsweise Ankergruppen aufweisen, auf einem ersten Substrat, wie Gold, Silicium, Siliciumnitrid, Platin oder Iridium, gebildet wird, die in lateraler Richtung vernetzte Monoschicht auf dem Substrat unter Vakuum oder Inertgas auf eine Temperatur von > 1000K erhitzt wird, und anschließend auf ein zweites Substrat, wie Siliciumoxid oder Glas, übertragen wird.

In einer besonders bevorzugten Ausführungsform der vorliegenden Erfindung wird die in lateraler Richtung vernetzte Monoschicht durch Vernetzung von niedermolekularen Aromaten und/oder niedermolekularen Heteroaromaten, die vorzugsweise Ankergruppen aufweisen, auf einem Substrat, wie Siliciumoxid, gebildet, und die in lateraler Richtung vernetzte Monoschicht auf dem Substrat unter Vakuum oder Inertgas auf eine Temperatur von > 1000K erhitzt, um eine elektrisch leitende Graphenschicht auf Siliciumoxid zu bilden. Auf diese Weise ist es beispielsweise möglich, eine elektrisch leitfähige Schicht auf Isolatorenoberflächen, wie beispielsweise Glas, zu bilden. Solche Anordnungen können beispielsweise in Monitoren und/oder Solarzellen Anwendung finden.

Das Substrat kann aus der Gruppe, bestehend aus Gold, Silber, Titan, Zirkonium, Vanadium, Chrom, Mangan, Wolfram, Molybdän, Platin, Aluminium, Eisen, Stahl, Silicium, Germanium, Indiumphosphid, Galliumarsenid und Oxiden oder Legierungen oder Mischungen derselben sowie Graphit, Indium-Zinn-Oxid (ITO) und Silikat- oder Boratgläsern, ausgewählt sein.

In einer Ausführungsform der vorliegenden Erfindung kann die aus den niedermolekularen Aromaten und/oder niedermolekularen Heteroaromaten aufgebaute Monoschicht an ihrer Oberfläche funktionelle Gruppen, ausgewählt aus Halogenatomen, Carboxy-, Trifluormethyl-, Amino-, Nitro-, Cyano-, Thiol-, Hydroxy- oder Carbonylgruppen, tragen. Die niedermolekularen Aromaten- und/oder niedermolekularen Heteroaromatenmoleküle bzw. -einheiten, welche die Monoschicht aufbauen, können dabei mit Hilfe einer Ankergruppe chemisch an eine darunterliegende Substratoberfläche angekoppelt oder an diese kovalent gebunden sein.

In einer besonders bevorzugten Ausführungsform der vorliegenden Erfindung kann eine aus Biphenyleinheiten aufgebaute Monoschicht über Thiogruppen als Ankergruppen an eine entsprechende Substratoberfläche, insbesondere aus Gold oder Silber, kovalent gebunden sein.

Die Monoschicht, die durch Behandeln mit energiereicher Strahlung vernetzbar ist, weist eine Dicke von nur wenigen Atomlagen auf, wobei eine Schichtdicke im Bereich von 0,3 nm bis 3 nm bevorzugt ist.

Wenn die Oberfläche eines Substratmaterials atomar flach und homogen vorliegt, d.h. daß sie beispielsweise keine Stufenversetzungen oder Defekte aufweist, so ist auch die Graphenschicht atomar flach, homogen und defektfrei und bildet einen nahezu ideal glatten Film auf einer Substratoberfläche. Die Graphenschicht paßt sich der Morphologie des Substrats an. Auf diese Weise lassen sich auch Objekte mit dreidimensionalen Oberflächenmorphologien mit einer Graphenschicht definierter Dicke bedecken.

Gemäß einer bevorzugten Ausführungsform der vorliegenden Erfindung umfaßt das erfindungsgemäße Verfahren zur Herstellung von Graphenschichten die Schritte:
- Bereitstellen eines Substrats,
- gegebenenfalls Modifizieren der Oberfläche des Substrats,
- Aufbringen einer Monoschicht aus niedermolekularen Aromaten und/oder niedermolekularen Heteroaromaten unter kovalenter Bindung über Ankergruppen oder Physisorption auf eine Oberfläche des Substrats,
- zumindest bereichsweises Behandeln des erhaltenen Substrats mit energiereicher Strahlung derart, daß die über Ankergruppen kovalent oder durch Physisorption an die Oberfläche des Substrats gebundene, aus niedermolekularen Aromaten und/oder niedermolekularen Heteroaromaten aufgebaute Monoschicht (an den mit energiereicher Strahlung behandelten Bereichen) kovalent in lateraler Richtung vernetzt wird,
- gegebenenfalls Übertragen der in lateraler Richtung vernetzten Monoschicht von dem vorstehend beschriebenen Substrat auf ein anderes, vorzugsweise thermisch stabiles Substrat, und
- Erhitzen der in lateraler Richtung vernetzten Monoschicht, die durch zumindest bereichsweises Behandeln der aus niedermolekularen Aromaten und/oder niedermolekularen Heteroaromaten aufgebauten Monoschicht mit energiereicher Strahlung gebildet ist, unter Vakuum oder Inertgas auf eine Ternperatur von > 1000 K.

Unter dem Begriff "thermisch stabiles Substrat" versteht man ein Substrat, das in dem Schritt des Erhitzens der in lateraler Richtung vernetzten Monoschicht unter Vakuum stabil ist und im wesentlichen unverändert bleibt. Ein thermisch stabiles Substrat ist bei > 1000K, besonders bevorzugt > 1600K, und noch bevorzugter > 2000K stabil und verändert sich im wesentlichen nicht. Am meisten bevorzugt ist das thermisch stabile Substrat sogar bei > 3000K thermisch stabil und bleibt in dem Schritt des Erhitzens im wesentlichen unverändert.

Die gebildete Graphenschicht kann direkt auf einem Substrat verbleiben oder, beispielsweise durch Auflösen einer zwischen der gebildeten Graphenschicht und einem Substrat angeordneten Opferschicht, in analoger Weise wie vorstehend beschrieben, auf einem Substrat angeordnet werden. Ferner ist es möglich, daß die gebildete Graphenschicht freistehend auf einem Substrat angeordnet ist. Dies läßt sich insbesondere dadurch realisieren, daß eine freistehende in lateraler Richtung vernetzte Monoschicht in dem Schritt des Erhitzen der in lateraler Richtung vernetzten Monoschicht unter Vakuum oder Inertgas auf eine Temperatur von > 1000K eingesetzt wird.

Die aufgebrachte Monoschicht wird bei Behandlung mit energiereicher Strahlung, vorzugsweise Röntgenstrahlung, β-Strahlung, γ-Strahlung, VUV-Strahlung, EUV-Strahlung oder UV-Strahlung, kovalent in lateraler Richtung vernetzt, so daß eine physisorbierte oder kovalent gebundene, dünne und stabile Schicht auf der Substratoberfläche entsteht. Durch die Vernetzung in lateraler Richtung erlangen die aus den niedermolekularen Aromaten und/oder niedermolekularen Heteroaromaten aufgebauten Monoschichten hohe mechanische und chemische Stabilität und schützen die darunterliegende Substratoberfläche wirksam vor Beschädigung oder korrodierende Agentien. Darüber hinaus ist eine physisorbierte oder über Ankergruppen kovalent an die Oberfläche eines Substrats gebundene in lateraler Richtung vernetzten Monoschicht, die durch Behandeln einer aus niedermolekularen Aromaten und/oder niedermolekularen Heteroaromaten aufgebauten Monoschicht mit energiereicher Strahlung herstellbar ist, thermisch stabil und weist eine ausgezeichnete Haftung an einem geeigneten Substrat auf.

In einer Ausführungsform des erfindungsgemäßen Verfahrens kann das Vernetzen unter lateraler Strukturierung mittels feinfokussierter ionisierender Elektronen-, Ionen- oder Photonenstrahlung durchgeführt werden. Die Fokussierung und das Rastern des Strahls über die zu strukturierenden Bereiche kann durch elektronenoptische oder ionenoptische Elemente geschehen, wie beispielsweise bei der Elektronenstrahllithographie mit Rasterelektronenmikroskopen oder der Lithographie mit fokussierten Ionen (FIB). Vorzugsweise kann die Strukturierung auch mittels Nahsondenverfahren durchgeführt werden. Die Fokussierung von Elektronen, Ionen oder Photonen ist bei diesen durch die Kleinheit der Elektronen-, Ionen- oder Photonenquelle (Nahsonde) gewährleistet. Die Nahsonde wird dann in Abständen zwischen 0,1 nm und 1000 nm über die zu strukturierenden Bereiche geführt. Als Nahsonde für Elektronen eignen sich insbesondere die Spitzen von Rastertunnelmikroskopen (STM), Rasterkraftmikroskopen (AFM) und atomar definierte Feldemitterspitzen, die z.B. nach dem Verfahren von Müller et al. (Ultramicroscopy 50, 57 (1993)) hergestellt wurden. Letztere eignen sich besonders als Nahsonden zur Strukturierung bei größeren Abständen (> 10 nm) zwischen Sonde und Probe und können auch als Quellen für Feldionen verwendet werden. Zur Strukturierung mit Photonen eignen sich feine Spitzen aus Glas oder einem anderen photonenleitenden Material, wie sie in optischen Nahfeldmikroskopen (SNOM) verwendet werden. Bei allen Nahsondenverfahren wird die Nahsonde mittels einer Positioniereinheit, z.B. aus piezokeramischen Elementen, direkt über die zu belichtenden Bereiche platziert.

Werden anstelle einer Monoschicht aus niedermolekularen Aromaten und/oder niedermolekularen Heteroaromaten beispielsweise gesättigte, physisorbierte oder kovalent mittels einer Ankergruppe an eine Substratoberfläche gebundene Moleküle bzw. Einheiten wie Cyclohexyl, Bicyclohexyl, Tercyclohexyl, partiell oder vollständig hydrierte Naphthaline oder Anthracene oder partiell oder vollständig hydrierte Heteroaromaten aufgebracht, so kann im Wege der Behandlung mit energiereicher Strahlung neben der Vernetzung in lateraler Richtung eine Dehydrierung zu den entsprechenden Aromaten bzw. Heteroaromaten erfolgen. Wenn an der Oberfläche der aus den niedermolekularen Aromaten und/oder niedermolekularen Heteroaromaten aufgebauten Monoschicht Nitrogruppen gebunden sind, kann in dem erfindungsgemäßen Verfahren im Einwirkungsbereich der vernetzenden Strahlung auch eine Umwandlung dieser Nitrogruppen in Aminogruppen erfolgen.

In einer weiteren Ausführungsform des erfindungsgemäßen Verfahrens kann das Behandeln mit energiereicher Strahlung unter Verwendung einer Lochmaske derart durchgeführt werden, daß nur räumlich definierte Bereiche der auf der Substratoberfläche aufgebrachten Monoschicht belichtet bzw. bestrahlt werden, wodurch eine strukturierte Oberfläche auf dem Substrat mit geschützten und ungeschützten Bereichen entsteht, d.h. die belichten Bereiche sind geschützt und die unbelichteten Bereiche sind ungeschützt. Das erfindungsgemäß hergestellte Produkt kann somit auch als Negativresist eingesetzt werden.

Die an unbelichteten oder unbestrahlten Bereichen vorhandenen physisorbierten oder kovalent gebundenen bzw. chemisorbierten, vorzugsweise über Ankergruppen angebundenen niedermolekularen Aromaten und/oder niedermolekularen Heteroaromaten (d.h. die nicht Teil der lateral vernetzten Monoschicht sind) können anschließend entfernt werden. Dies kann beispielsweise durch eine thermische Behandlung, durch Behandeln mit einem geeigneten Lösungsmittel oder durch Behandeln mit einem geeigneten Desorptionsmittel erfolgen. Durch die vorstehend beschriebenen Strukturierungsmethoden unter Verwendung von energiereicher Strahlung ist es möglich, eine in lateraler Richtung vernetzte Monoschicht mit einer Strukturierung bzw. Mustergebung im Nanometerbereich zu erzeugen. Wenn die an unbelichteten bzw. unbestrahlten Bereichen vorhandenen adsorbierten bzw. kovalent gebundenen, vorzugsweise über Ankergruppen angebundenen niedermolekularen Aromaten und/oder niedermolekularen Heteroaromaten anschließend entfernt werden, und das resultierende Substrat anschließend unter Vakuum oder Inertgas auf eine Temperatur von > 1000K erhitzt wird, können somit Graphenschichten mit einer Strukturierung bzw. Mustergebung im Nanometerbereich erzeugt werden.

In einer anderen Ausführungsform ist es auch möglich, die an unbelichteten bzw. unbestrahlten Bereichen vorhandenen adsorbierten oder kovalent gebundenen, vorzugsweise über Ankergruppen angebundenen niedermolekularen Aromaten und/oder niedermolekularen Heteroaromaten nicht zu entfernen, und das resultierende Substrat direkt unter Vakuum oder Inertgas auf eine Temperatur von > 1000K zu erhitzen. Bei dieser Verfahrensweise werden die adsorbierten oder kovalent gebundenen, vorzugsweise über Ankergruppen angebundenen niedermolekularen Aromaten und/oder niedermolekularen Heteroaromaten thermisch desorbiert und die in lateraler Richtung vernetzten Aromaten und/oder Heteroaromaten, welche die vernetzte Monoschicht bilden, werden in Graphenschichten mit einer Strukturierung bzw. Mustergebung im Nanometerbereich umgewandelt. Dadurch ist es erstmals gelungen, Graphenschichten mit einer gezielten Strukturierung bzw. Mustergebung im Nanometerbereich auf einem Substrat zu erzeugen.

Zur Bestrahlung mit Elektronen kann eine großflächig ausleuchtende Elektronenquelle, z. B. eine "flood gun" oder ein Aufbau, wie in Abb. 2 von Hild et al., Langmuir, 14, 342-346 (1998), beschrieben, verwendet werden. Die verwendeten Elektronenenergien können dabei in einem großen Bereich, vorzugsweise 1 bis 1000 eV, den jeweiligen organischen Filmen und ihren Substraten angepaßt werden. Beispielsweise kann zur Vernetzung von 1,1'-Biphenyl-4-thiol auf Gold Elektronenstrahlung mit 50 eV oder 100 eV verwendet werden.

Zur lateralen Strukturierung kann eine großflächig ausleuchtende Elektronenquelle in Verbindung mit einer Lochmaske verwendet werden, so daß nur die offenen Bereiche den Elektronen ausgesetzt werden. Zur lateralen Strukturierung eignen sich ebenfalls fokussierte Elektronenstrahlen, die durch ein Rasterelektronenmikroskop über die zu vernetzenden Bereichen positioniert werden können. Weiterhin können Elektronenquellen wie z.B. Feldemitterspitzen, aus der Elektronen in einen kleinen Winkelbereich emittiert werden, direkt verwendet werden, wenn sie mittels geeigneter Verstellelemente (Schrittmotoren, Piezotranslatoren) über die zu vernetzenden Bereichen positioniert werden.

Zur großflächigen Vernetzung mittels elektromagnetischer Strahlung (z.B. Röntgenstrahlung, UV-Strahlung) können im Stand der Technik verfügbare Lichtquellen verwendet werden. Zur lateralen Strukturierung bieten sich für den jeweiligen Wellenlängenbereich geeignete Masken oder das Abrastern mittels geeigneter Lichtleiter an.

Die Oberfläche eines Substrats kann vor dem Aufbringen der Monoschicht einer Reinigung oder chemischen Modifizierung unterworfen werden. Die Reinigung kann durch einfaches Abspülen der Oberfläche mit Wasser oder organischen Lösungsmitteln, wie Ethanol, Aceton oder Dimethylformamid, oder durch Behandlung mit einem durch UV-Strahlung erzeugten Sauerstoff-Plasma erfolgen. Wenn die Monoschichten mit Ankergruppen wie Phosphonsäure-, Carbonsäure- oder Hydroxamsäuregruppen auf oxidierten Metalloberflächen aufgebracht werden sollen, ist eine vorherige kontrollierte Oxidation der Metalloberfläche vorteilhaft. Dies kann durch Behandlung der Metalloberfläche mit oxidierenden Agentien wie Wasserstoffperoxid, Caro'scher Säure oder Salpetersäure erfolgen. Eine weitere Möglichkeit zur Modifizierung einer Substratoberfläche besteht im Aufbringen einer ersten organischen Monoschicht mit terminalen reaktiven Gruppen wie Amino-, Hydroxy-, Chlor-, Brom-, Carboxy-, oder Isocyanatgruppen, an die in einem zweiten Schritt die eigentlich zu vernetzende Monoschicht mittels geeigneter funktioneller Gruppen chemisch angekoppelt wird.

Das Aufbringen der Monoschicht aus niedermolekularen Aromaten und/oder niedermolekularen Heteroaromaten auf ein Substrat kann beispielsweise durch Tauch-, Gieß-, Spinschleuderverfahren, durch Adsorption aus verdünnter Lösung oder durch Abscheidung aus der Gasphase in Vakuum durchgeführt werden.

Gemäß einer Ausführungsform des erfindungsgemäßen Verfahren wird das Erhitzten der mindestens einen Monoschicht mit in lateraler Richtung vernetzten niedermolekularen Aromaten und/oder Heteroaromaten unter Vakuum durchgeführt. Dabei wird das in dem Verfahren zur Herstellung von Graphenschichten angelegte Vakuum derart ausgewählt, daß eine Oxidation und/oder Verunreinigung mit unerwünschten Fremdatomen der in lateraler Richtung vernetzten Monoschicht und der daraus gebildeten Graphenschicht in dem Schritt des Erhitzens wirksam verhindert werden kann. In dem Verfahren zur Herstellung von Graphenschichten wird daher ein Druck von < 1 mbar angelegt, wobei ein Druck von < 10⁻² mbar bevorzugt und ein Druck von < 10⁻³ mbar besonders bevorzugt ist. In dem Verfahren zur Herstellung von Graphenschichten hat sich ein Vakuum in einem Druckbereich von 10⁻² mbar bis 10⁻¹² mbar als sehr gut geeignet erwiesen, wobei ein Vakuum in einem Druckbereich von 10⁻⁷ mbar bis 10⁻¹² mbar (Ultrahochvakuum) besonders gut geeignet ist.

In einer anderen Ausführungsform des erfindungsgemäßen Verfahrens wird das Erhitzen der mindestens einen Monoschicht mit in lateraler Richtung vernetzten niedermolekularen Aromaten und/oder Heteroaromaten unter Inertgas durchgeführt, wobei im Rahmen der vorliegenden Erfindung unter dem Begriff "Inertgas" auch Gemische aus einem Inertgas und Wasserstoff verstanden werden. Das Inertgas kann jedwedes geeignete Inertgas oder dessen Gemisch mit Wasserstoff sein. Vorzugsweise wird Argon oder ein Gemisch aus Argon und Wasserstoff verwendet.

Das Erhitzen der in lateraler Richtung vernetzten Monoschicht, die durch Behandeln einer aus niedermolekularen Aromaten und/oder niedermolekularen Heteroaromaten aufgebauten Monoschicht mit energiereicher Strahlung herstellbar ist, wird bei einer Temperatur von > 1000K durchgeführt und eine Temperatur von > 1300K ist besonders bevorzugt. Noch bevorzugter ist eine Temperatur von > 1600K. Wird das Erhitzen bei höheren Temperaturen (d.h. bei Temperaturen von > 1600K) durchgeführt, ist es bevorzugt, als Substrat nicht Molybdän oder Wolfram zu verwenden, da diese mit den erfindungsgemäßen Graphenschichten bei diesen Temperaturen unter Ausbildung von Karbiden reagieren.

Gemäß einer weiteren bevorzugten Ausführungsform des erfindungsgemäßen Verfahrens kann das Erhitzen der in lateraler Richtung vernetzten Monoschicht, die durch Behandeln einer aus niedermolekularen Aromaten und/oder niedermolekularen Heteroaromaten aufgebauten Monoschicht mit energiereicher Strahlung herstellbar ist, bei einer Temperatur von > 2000K, insbesondere bei einer Temperatur von > 2500K oder einer Temperatur von > 3000K durchgeführt werden.

Die Temperaturobergrenze für den Schritt des Erhitzens der in lateraler Richtung vernetzten Monoschicht, die durch Behandeln einer aus niedermolekularen Aromaten und/oder niedermolekularen Heteroaromaten aufgebauten Monoschicht mit energiereicher Strahlung herstellbar ist, wird durch die Sublimationstemperatur von Kohlenstoff und die Schmelztemperatur bzw. Zersetzungstemperatur des verwendeten Substrats bestimmt.

Ferner wird eine Graphenschicht bereitgestelt, welche nach dem vorstehend definierten erfindungsgemäßen Verfahren erhältlich ist.

Durch Anwendung des erfindungsgemäßen Verfahrens ist es möglich, insbesondere mittels lithographischer Techniken, in lateraler Richtung vernetzte Monoschichten in beliebiger Form und Größe herzustellen, die in Graphenschichten in beliebiger Form und Größe umgewandelt werden können.

Durch Auswahl geeigneter Verfahrensparameter bei der lateralen Vernetzung (z.B. Energie und Dosis) und Temperatur und/oder Druck läßt sich die chemische Reinheit (z.B. die Anzahl and Fremdatomen) und die strukturellen Defekte in den Graphenschichten kontrollieren.

Durch Verwendung von chemisch funktionalisierten Monoschichten ist die Herstellung von chemisch dotierten und/oder chemisch funktionalisierten Graphenschichten möglich.

Die Einsatzbereiche der Graphenschichten sind nanoskopische elektrische Leiter, leitfähige Membranen in miniaturisierten Drucksensoren (z.B. Nanomikrophonen), Unterlagen in der Elektronenmikroskopie, die Dotierung von Graphen zur Einstellug der elektrischen Leitfähigkeit und die chemische Funktionalisierung von Graphen, beispielsweise zur Stofftrennung (z.B. als Membran oder Filter).

Die vorliegende Erfindung wird durch die nachfolgenden Beispiele näher erläutert.

### Beispiele

### A) Herstellung einer in lateraler Richtung vernetzten Monoschicht durch Behandeln einer aus niedermolekularen Aromaten und/oder niedermolekularen Heteroaromaten aufgebauten Monoschicht mit energiereicher Strahlung:

### Beispiel A1

Eine Monoschicht von 4-Biphenylthiol auf Gold wird hergestellt, indem ein mit einer 100 nm dicken Goldschicht bedampfter Siliziumwafer eine Stunde lang in eine 1 mmolare ethanolische Lösung von 4-Biphenylthiol gebracht wird. Anschließend wird der Wafer herausgenommen, mehrfach mit Ethanol p.a. abgespült und im Stickstoffstrom getrocknet. Zur Vernetzung der Schichten wird der Wafer mit der Monoschicht in einer Vakuumkammer (p = 10⁻⁵ bis 10⁻⁹ mbar) mit einer "Leybold flood gun" (Typ 869000) mit Elektronen der Energie 100 eV und einer Dosis von 40.000 µC/cm² bestrahlt. Nach dem Herausnehmen aus der Vakuumkammer kann die Schicht unmittelbar ihrem Verwendungszweck zugeführt oder chemisch weiter funktionalisiert werden.

### Beispiel A2

Nach mehrfachem Reinigen einer Oberfläche von rostfreiem Stahl mit üblichen organischen Detergens-Lösungen und mehrfachem Abspülen mit entionisiertem Wasser wird eine Monoschicht von Terphenyl-4-phosphonsäure durch Behandeln der gereinigten Oberfläche mit einer 1 mmolaren Lösung der Terphenylphosphonsäure in Dimethylformamid hergestellt. Nach 12 Stunden ist die Monoschicht ausgebildet und das Stahlsubstrat wird je einmal mit reinem Dimethylformamid und mit entionisiertem Wasser abgespült. Danach wird die Monoschicht in gleicher Weise wie in Beispiel 1 bestrahlt und vernetzt. Die Elektronenenergie kann hierbei bis auf 200 eV angehoben werden. Zur vollständigen Vernetzung genügt eine Dosis von 30.000 µC/cm².

### Beispiel A3

Ein Zahnrad aus Silicium mit einem Durchmesser von 500 µm wird 1 min lang in eine Mischung aus 3 Teilen 30% Wasserstoffperoxid und 1 Teil konz. Schwefelsäure gebracht. Danach wird es mit entionisiertem Wasser abgespült und in eine 1 mmolare Lösung von 4-Trichlorsilylbiphenyl in Tetrahydrofuran gebracht. Nach zwei Stunden wird das Zahnrad herausgenommen, mit Tetrahydrofuran abgespült, im Stickstoffstrom getrocknet und der gleichen Bestrahlungs- und Vernetzungsprozedur wie in Beispiel 1 unterworfen. Es wird eine stabile und durchgängig vernetzte Oberflächenschicht erhalten, die das Zahnrad wirksam vor mechanischem Abrieb schützt.

### Beispiel A4

Es werden analog zu Beispiel 1 Monoschichten von 4,4'-Nitrobiphenylthiol auf einer Goldoberfläche hergestellt. Vor der Bestrahlung wird die Schicht mit einer metallischen Lochmaske abgedeckt. Nach der Bestrahlung, die wie in Beispiel 1 durchgeführt wird, sind die Nitrogruppen an den belichteten Stellen zu Aminogruppen umgewandelt worden und die Schicht ist an diesen Stellen vernetzt. Die übrigen, von der Maske abgedeckten Bereiche der Schicht bleiben unverändert. Die durch die Bestrahlung entstandenen Aminogruppen können beispielsweise nachfolgend durch Behandlung mit einem Isocyanat, einem Säurechlorid oder Säureanhydrid aus Lösung in einem organischen Lösungsmittel wie Tetrahydrofuran oder Aceton acyliert werden.

### B) Herstellung von Graphenschichten durch Erhitzen einer in lateraler Richtung vernetzten Monoschicht unter Vakuum auf eine Temperatur von > 1000K:

### Beispiel B1

Eine auf Siliciumnitrid gebildete in lateraler Richtung vernetzte Monoschicht aus 4'-[(3-Trimethoxysilyl)propoxy]-[1,1'-biphenyl]-4-carbonitril wird auf ein Platingitter übertragen und bei 10⁻⁵ mbar auf 1500K erhitzt.

### Beispiel B2

Eine auf Gold gebildete in lateraler Richtung vernetzte Monoschicht aus 4-Biphenylthiol wird auf ein Platinsubstrat übertragen und bei 10⁻⁸ mbar auf 1800K erhitzt.

### Beispiel B3

Eine auf Gold gebildete in lateraler Richtung vernetzte Monoschicht aus 4-Biphenylthiol wird auf ein Iridiumsubstrat übertragen und bei 10⁻⁶ mbar auf 2000K erhitzt.

Die in den Beispielen B1 bis B3 gebildeten Graphenschichten zeigen nach Erhitzen auf die entsprechend angegebene Temperatur unter den entsprechenden Druck die gewünschten Eigenschaften, wie eine Dicke < 2 nm und elektrische Leitfähigkeit.

## Patentansprüche

1. Verfahren zur Herstellung von Graphenschichten, die aus 1 bis 3 Atomlagen bestehen, umfassend den Schritt des Erhitzens mindestens einer Monoschicht mit in lateraler Richtung vernetzten niedermolekularen Aromaten und/oder niedermolekularen Heteroaromaten unter Vakuum oder Inertgas auf eine Temperatur von > 1000K, wobei die Monoschicht aus Aromaten, ausgewählt aus der Gruppe, bestehend aus Phenyl, Biphenyl, Terphenyl, Naphthalin und Anthracen, und/oder Heteroaromaten, ausgewählt aus der Gruppe, bestehend aus Bipyridin, Terpyridin, Thiophen, Bithienyl, Terthienyl und Pyrrol, ausgewählt ist bzw. sind.

2. Verfahren nach Anspruch 1, wobei die niedermolekularen Aromaten und/oder niedermolekularen Heteroaromaten Ankergruppen aufweisen.

3. Verfahren nach Anspruch 2, wobei die Ankergruppen aus der Gruppe, bestehend aus Carboxy-, Thio-, Trichlorsilyl-, Trialkoxysilyl-, Phosphonat-, Hydroxamsäure- und Phosphatgruppen, ausgewählt sind.

4. Verfahren nach Anspruch 2 oder 3, wobei die Ankergruppen mit Hilfe eines Abstandshalters mit einer Länge von 1 bis zu 10 Methylengruppen an die in lateraler Richtung vernetzte, aus niedermolekularen Aromaten und/oder Heteroaromaten aufgebaute Monoschicht kovalent gebunden sind.

5. Verfahren nach einem der Ansprüche 1 bis 4, wobei die in lateraler Richtung vernetzte Monoschicht auf einem Substrat physisorbiert oder chemisorbiert ist oder freistehend vorliegt.

6. Verfahren nach Anspruch 5, wobei das Substrat bereichsweise Aussparungen aufweist.

7. Verfahren nach Anspruch 5 oder 6, wobei das Substrat aus der Gruppe, bestehend aus Gold, Silber, Titan, Zirkonium, Vanadium, Chrom, Mangan, Wolfram, Molybdän, Platin, Iridium, Aluminium, Eisen, Stahl, Silicium, Germanium, Indiumphosphid, Galliumarsenid und Oxiden oder Legierungen oder Mischungen derselben sowie Graphit, Indium-Zinn-Oxid (ITO) und Silikat- oder Boratgläsern, ausgewählt ist.

8. Verfahren nach einem der Ansprüche 1 bis 7, wobei die aus niedermolekularen Aromaten und/oder niedermolekularen Heteroaromaten aufgebaute Monoschicht an ihrer Oberfläche funktionelle Gruppen trägt, ausgewählt aus Halogenatomen, Carboxy-, Trifluormethyl-, Amino-, Nitro-, Cyano-, Thiol-, Hydroxy- oder Carbonylgruppen.

9. Verfahren nach einem der Ansprüche 1 bis 8, wobei die Monoschicht aus Biphenyleinheiten aufgebaut ist und die Ankergruppen Thiogruppen sind.

10. Verfahren nach einem der Ansprüche 1 bis 9, wobei die Monoschicht eine Schichtdicke im Bereich von 0,3 nm bis 3 nm aufweist.

11. Verfahren nach einem oder mehreren der Ansprüche 1 bis 10, worin das Erhitzen unter Vakuum in einem Druckbereich von 10⁻⁷ mbar bis 10⁻¹² mbar durchgeführt wird.

12. Verfahren nach einem oder mehreren der Ansprüche 1 bis 10, worin das Erhitzen unter Inertgas durchgeführt wird.

13. Verfahren nach einem oder mehreren der Ansprüche 1 bis 12, worin das Erhitzen der in lateraler Richtung vernetzten Monoschicht bei einer Temperatur von > 1600K durchgeführt wird.

## Claims

1. A method for preparing graphene layers consisting of 1 to 3 atomic layers, comprising the step of heating at least one monolayer with low-molecular weight aromatics and/or low-molecular weight heteroaromatics, which are crosslinked in the lateral direction, under vacuum or inert gas to a temperature of > 1000 K, wherein the monolayer is selected from aromatics selected from the group consisting of phenyl, biphenyl, terphenyl, naphthalene and anthracene, and/or heteroaromatics selected from the group consisting of bipyridine, terpyridine, thiophene, bithienyl, terthienyl and pyrrole.

2. The method according to claim 1, wherein the low-molecular weight aromatics and/or low-molecular weight heteroaromatics have anchor groups.

3. The method according to claim 2, wherein the anchor groups are selected from the group consisting of carboxy, thio, trichlorosilyl, trialkoxysilyl, phosphonate, hydroxamic acid and phosphate groups.

4. The method according to claim 2 or 3, wherein the anchor groups are covalently bonded to the laterally crosslinked monolayer composed of low-molecular weight aromatics and/or low-molecular weight heteroaromatics by means of a spacer with a length of 1 to 10 methylene groups.

5. The method according to any one of claims 1 to 4, wherein the laterally crosslinked monolayer is physisorbed or chemisorbed on a substrate, or is present in a free-standing manner.

6. The method according to claim 5, wherein the substrate has recesses in some areas.

7. The method according to claim 5 or 6, wherein the substrate is selected from the group consisting of gold, silver, titanium, zirconium, vanadium, chromium, manganese, tungsten, molybdenum, platinum, iridium, aluminium, iron, steel, silicon, germanium, indium phosphide, gallium arsenide and oxides or alloys or mixtures thereof, as well as graphite, indium tin oxide (ITO) and silicate or borate glasses.

8. The method according to any one of claims 1 to 7, wherein the monolayer composed of low-molecular weight aromatics and/or low-molecular weight heteroaromatics carries functional groups on its surface, the groups being selected from halogen atoms, carboxy, trifluoromethyl, amino, nitro, cyano, thiol, hydroxy or carbonyl groups.

9. The method according to any one of claims 1 to 8, wherein the monolayer is composed of biphenyl units, and the anchor groups are thio groups.

10. The method according to any one of claims 1 to 9, wherein the monolayer has a layer thickness in the range from 0.3 nm to 3 nm.

11. The method according to one or more of claims 1 to 10, wherein heating is carried out under vacuum in a pressure range from 10⁻⁷ mbar to 10⁻¹² mbar.

12. The method according to one or more of claims 1 to 10, wherein heating is carried out under inert gas.

13. The method according to one or more of claims 1 to 12, wherein heating of the laterally crosslinked monolayer is carried out at a temperature of > 1600 K.

## Revendications

1. Procédé de fabrication de couches de graphène qui consistent en 1 à 3 couches d'atomes, comportant l'étape de chauffage d'au moins une monocouche comportant des aromates à faible poids moléculaire et/ou des hétéroaromates à faible poids moléculaire, réticulés en direction latérale, sous vide ou sous atmosphère inerte, à une température de > 1000K, la monocouche étant choisie parmi les aromates choisis parmi le groupe constitué par les groupements phényle, biphényle, terphényle, le naphthalène et l'anthracène, et/ou les heteroaromates choisis parmi le groupe constitué par le bipyridine, le terpyridine, le thiophène, le bithiényle, le terthiényle et le pyrrole.

2. Procédé selon la revendication 1 dans lequel les aromates à faible poids moléculaire et/ou les hétéroaromates à faible poids moléculaire comportent des groupes d'ancrage.

3. Procédé selon la revendication 2 dans lequel les groupes d'ancrage sont choisis parmi le groupe constitué par les groupements carboxy, thio, trichlorosilyl, trialkoxysilyl, phosphonate, acide hydroxamique et phosphate.

4. Procédé selon la revendication 2 ou 3 dans lequel les groupes d'ancrage sont liés de manière covalente à l'aide d'un groupement d'entretoise ayant une longueur de 1 à 10 groupements méthylène à la monocouche composée d'aromates et/ou heteroaromates à faible poids moléculaire, réticulés en direction latérale.

5. Procédé selon l'une des revendications 1 à 4 dans lequel la monocouche réticulée en direction latérale se trouve à l'état adsorbé physiquement ou chimiquement sur un substrat ou à l'état isolé.

6. Procédé selon la revendication 5 dans lequel le substrat présente par zone des évidements.

7. Procédé selon la revendication 5 ou 6 dans lequel le substrat est choisi parmi le groupe constitué par l'or, l'argent, le titane, le zirconium, le vanadium, le chrome, le manganèse, le tungstène, le molybdène, le platine, l'iridium, l'aluminium, le fer, l'acier, le silicium, le germanium, le phosphure d'indium, l'arséniure de gallium et les oxydes ou alliages ou mélanges de ceux-ci, ainsi que le graphite, l'oxyde indium-étain (ITO) et les verres de silicate ou de borate.

8. Procédé selon l'une des revendications 1 à 7 dans lequel la monocouche d'aromates à faible poids moléculaire et/ou hétéroaromates à faible poids moléculaire comporte à sa surface des groupements fonctionnels choisis parmi les atomes d'halogène, des groupements carboxy, trifluorométhyle, amino, nitro, cyano, thiol, hydroxy ou carbonyle.

9. Procédé selon l'une des revendications 1 à 8 dans lequel la monocouche est composée d'unités biphényle et les groupes d'ancrage sont des groupements thio.

10. Procédé selon l'une des revendications 1 à 9 dans lequel la monocouche présente une épaisseur de l'ordre de 0,3 nm à 3 nm.

11. Procédé selon l'une ou plusieurs des revendications 1 à 10 dans lequel le chauffage est effectué sous vide dans une gamme de pressions de 10⁻⁷ mbar à 10⁻¹² mbar.

12. Procédé selon l'une ou plusieurs des revendications 1 à 10 dans lequel le chauffage est effectué sous atmosphère inerte.

13. Procédé selon l'une ou plusieurs des revendications 1 à 12 dans lequel le chauffage de la monocouche réticulée en direction latérale est effectué à une température de > 1600K.
